# EUROPEAN PATENT SPECIFICATION

(11) **EP 0 525 549 B1**
(45) Date of publication and mention of the grant of the patent: **26.06.1996**
(21) Application number: 92112261.0
(22) Date of filing: 17.07.1992
(51) Int. Cl.: G01P 21/00, G01P 15/09, B60R 21/00

(54) **Acceleration sensor with self-test, and circuit therefor**
Beschleunigungssensor mit Selbst-Test und dazu gehörige Schaltung
Capteur d'accélération avec auto-test, et circuit pour celui-ci

(30) Priority: 19.07.1991 JP 179125/91
(43) Date of publication of application: 03.02.1993
(73) Proprietor: MITSUBISHI CHEMICAL CORPORATION, Chiyoda-ku, Tokyo (JP)
(72) Inventor: Ohta, Fumio, LTD 1, Toho-cho Yokkaichi-shi Mie-ken (JP); Tanaka, Nobuo c/oElectronic prod.development, 5-2. 2 chome Marunouchi Chiyoda-ku,Tokyo (JP); Mukasa, Yoshinao c/oElectronic prod.development, 5-2. 2 chome Marunouchi Chiyoda-ku,Tokyo (JP); Gohkura, Akira c/oElectronic prod.development, 5-2. 2 chome Marunouchi Chiyoda-ku,Tokyo (JP)
(74) Representative: Walter, Helmut, Dipl.-Ing.

(56) References cited:
- EP-A- 0 401 669
- US-A- 4 873 452
- US-A- 4 950 914
- PATENT ABSTRACTS OF JAPAN vol. 14, no. 199 (P-1040) 23 April 1990 & JP-A-02 040 566

## Description

### Field of the Invention

This invention relates to an acceleration sensor system used for airbag safety system, and more particularly an acceleration sensor device suitable for self-checking (diagnostic) and an acceleration sensor system having self-checking (diagnostic) function.

### Background of the Invention

Heretofore, an acceleration sensor system used for an airbag safety system generally comprises an acceleration sensor device generating an electric signal responsive to variation of an applied acceleration force and a circuit which amplifies and integrates an output signal of the acceleration sensor device. The system actuates an airbag when the integrated value exceeds a predetermined value. Abnormal operation of the acceleration sensor system directly concerns human life, therefore an operation check of. The acceleration sensor system is indispensable. The acceleration sensor system having a self-checking circuit for operation check is disclosed in US-Patent No. 3,911,391. In this prior art system operation is checked when the vehicle's battery voltage is started. Concretely, during a period of approximately 100 ms a pulse generating circuit continuously generates two kinds of check pulse of different levels in response to turning ON the vehicle's battery voltage. An integrator integrates the output value of the piezoelectric sensor system for these pulses and a comparator compares each of the integrated results corresponding to the check pulses with a predetermined value. In this prior art, an ignition element of the airbag is isolated during checking to avoid actuation of the airbag by the check pulse, and if the checking result is within the standard range, the ignition element is electrically connected to the sensor system. Therefore, this system cannot perform a check once the vehicle is in motion.

A system capable of checking the function of an acceleration sensor during driving is described in US-A-4,873,452.

### Summary of the Invention

It is an object of the present invention to provide an acceleration sensor device suitable for self-checking during driving.

Another object of this invention is to provide self-checking circuit suitable for an acceleration sensor device.

Another object of this invention is to provide an acceleration sensor system which detects the acceleration force applied to the vehicle and permits self-checking while the vehicle is in motion.

According to this invention, an acceleration sensor device is provided comprising planar vibrator means having a piezoelectric area having piezoelectricity and a non-piezoelectric area having no piezoelectricity, a first electrode provided on the upper face of said piezoelectric area for generating an acceleration detecting signal, a second electrode provided on the upper face of said non-piezoelectric area for inputting a checking signal and a third electrode provided on the lower face of said vibrator means, said acceleration detecting signal corresponding to an applied acceleration force.

Moreover, an acceleration sensor system comprising an acceleration sensor device as recited above and a self-checking circuit is provided, the self-checking circuit comprising
- oscillation circuit means supplying a self-checking signal having a predetermined frequency and voltage to the second electrode of said acceleration sensor device,
- first checking circuit means generating a first chekking signal representing the compared result of comparing the frequency component of said self-checking signal included in said acceleration detecting signal with a predetermined first value,
- first adder means for superimposing a direct current signal of predetermined voltage to said acceleration detecting signal,
- filter circuit means outputting an acceleration signal representing an acceleration force applied to said acceleration sensor device eliminating said frequency component of said self-checking signal from an output signal of said first adder means,
- second checking circuit means generating a second chekking signal by establishing whether said acceleration signal lies within a predetermined normal voltage range,
- third checking circuit means generating a checking result signal representing the operation state of said acceleration sensor device, in response to said first and second checking signals from said first and said second checking circuit means,
- said third checking circuit means comprising a second adder outputting an added signal by adding said first and second checking signals, an integral circuit integrating said added signal for predetermined period, and a comparator circuit outputting said checking result signal by comparing said integrated signal with a predetermined third value.

### Brief description of the Drawings

These and other objects and features of the invention will be better understood upon consideration of the following detailed description and the accompanying drawings in which:
- Fig. 1: is a cross-sectional view of an illustrative embodiment of the present invention for an acceleration sensor device,
- Fig. 2a and 2b: are plan views showing the arrangement of the electrodes of the acceleration sensor element shown in Fig. 1,
- Fig. 3: shows an equivalent circuit of the acceleration sensor element shown in Fig. 1,
- Fig. 4: is a block diagram showing construction of an acceleration sensor system having self-checking function according to this invention,
- Figs. 5a to 5h: are graphs of waveforms representative of normal operation in Fig. 4,
- Figs. 6a to 6g: are graphs of waveforms representative of abnormal operation in Fig. 4.

### Detailed description of the preferred embodiment

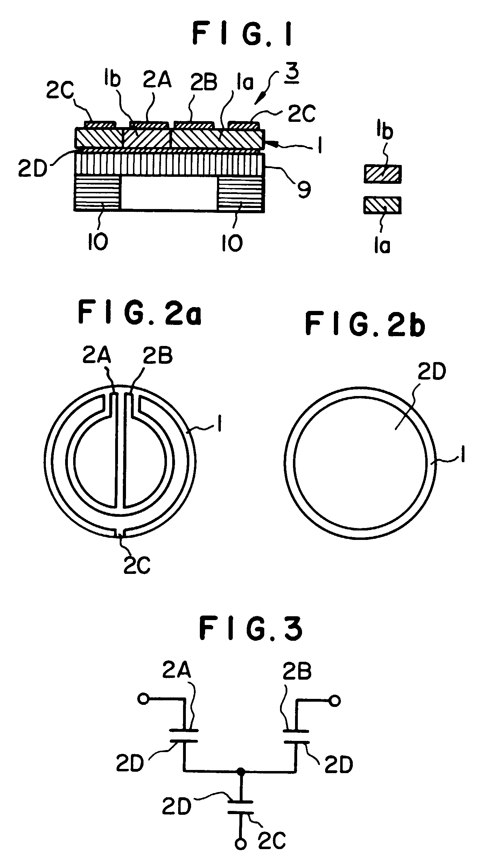

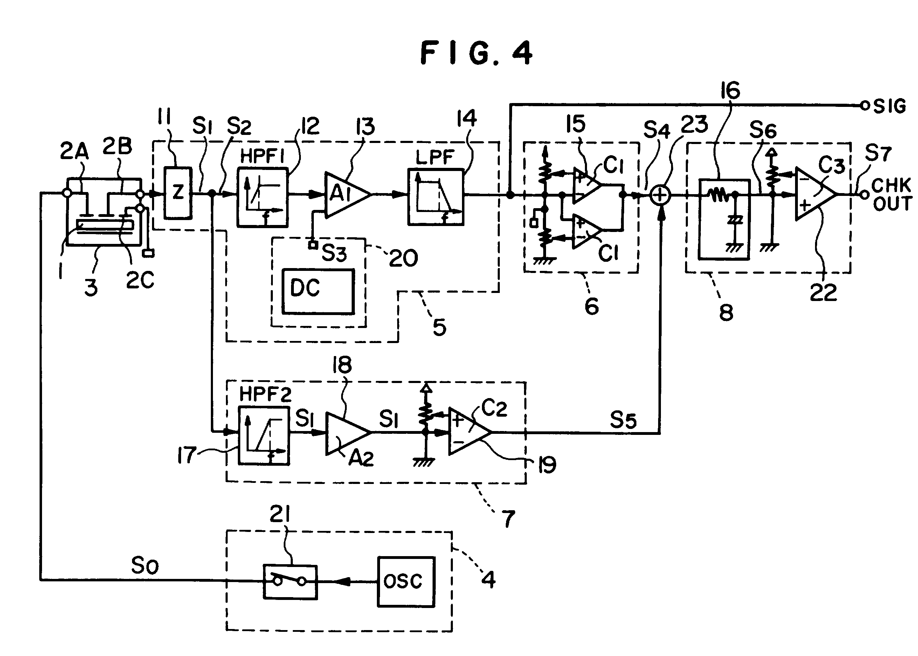

As shown in Fig. 1 a vibrator 1 of an acceleration sensor device 3 according to an embodiment of the present invention consits of piezoelectric material which has a piezoelectric area 1a and non-piezoelectric area 1b. This type of vibrator 1 can be realized by applying an electric field to the area 1a to be the piezoelectric area. Vibrator 1 has a checking electrode 2A, a detecting electrode 2B, a common electrode 2C and an intermediate electrode 2D. Figs. 2a and 2b show the arrangement of the electrodes 2A to 2D. As shown in the Figs. the vibrator 1 has a disk like shape and the electrodes 2A to 2C are distributed on the upper face of the vibrator 1, and the electrode 2D are distributed on the upper face of the vibrator 1, and the electrode 2D covers almost the entire underside of the vibrator 1. An area covered by the checking electrode 2A of the vibrator 1 is not polarized and has no piezoelectric characteristic. In Fig. 1, an acceleration sensor device 3 has backbord 9 as a protecting member and a supporting frame 10 for supporting the backbord 9. The supporting frame 10 has ring shape and supports at border part to make free displacement of central part of the vibrator 1. Fig. 3 shows an equivalent circuit of the vibrator 1. As a result, the acceleration sensor device can cancel pyroelectric voltage and eliminates an influence of temperature variations on the output signal due to. As explained later, the checking electrode 2A is used for checking the sensor device, the detecting electrode 2B is used for picking up an electric signal proportional to the applied acceleration force, the common electrode 2C is used for signal ground. Fig. 4 explains an acceleration sensor system having a self-chekking function. This acceleration sensor system comprises of an amplifier circuit 5, an offset checking circuit 6, an oscillator circuit 4, an oscillating signal checking circuit 7, and an extra checking circuit 8 in addition to the acceleration sensor device 3.

The oscillator circuit 4 generates the checking signal So having a predetermined frequency and is to be supplied to electrode 2A of the sensor device 3. The frequency of the checking signal So is preferably a frequency in the area of 5KHz which is easily distinguised from the normal frequency range (1 - 1KHz) generated by vibration or acceleration during normal driving. Oscillator circuit 4 has switch 21 for controlling the supply of checking signal So for intermittent self-chekking. If the electrical connection of acceleration sensor device 3 is normal, an oscillating signal S1 having a voltage which is proportional to the voltage of the checking signal So is produced by the detection electrode 2B by means of a capacitance coupling shown in the equivalent circuit of Fig. 3. Therefore, detecting electrode 2B produces an added signal (S1 + S2) which is superimposed oscillating signal S1 and the acceleration signal S2 which is proportional to the acceleration force applied to vibrator 1.

The amplifier circuit 5 is connected to detecting electrode 2B of the acceleration sensor device 3 and generates an acceleration signal which represents the acceleration force applied to the acceleration sensor device 3. In the amplifier circuit 5, an impedance transducer 11 matches an output impedance of the detecting electrode 2A and an input impedance of first and second highpass filters 12 and 17. The first highpass filter 12 has low cut-off frequency such as 1Hz, and eliminates a low zone variation due to the pyroelectric effect of the acceleration sensor device 3 and long periodic variation of direct current voltage of the impedance transducer 11. The first amplifier 13 amplifies the added signal (S1 + S2) and adds an offset signal S3 generated by an offset signal generator 20 to the amplified added signal (S1 + S2). The offset signal S3 is a predetermined direct current voltage signal. A low pass filter 14 eliminates the frequency component of oscillating signal S1 from the amplified added signal and outputs acceleration signal SIG.

Oscillating signal checking circuit 7 extractes a frequency component of the oscillating signal S1 from the impedance transduced added signal (S1 + S2) by means of impedance transducer 11 in the amplifier circuit 5 and generates an oscillation checking signal S5 having predetermined levels which represent normal and abnormal states. In the oscillating signal checking circuit 7, a highpass filter 17 has a cut off frequency such as 1 KHz, and eliminates the vibration frequency component (1 - 1KHz) produced during normal driving from the output signal of the impedance transducer 11 and extracts the oscillating signal S1. A second amplifier 18 amplifies oscillating signal S1, extracted by highpass filter 17. The amplified oscillating signal S1 is compared with a predetermined reference voltage by a second comparator circuit 19 and transduced into a rectangular wave signal according to the comparison result. Now assume that the rectangular wave signal is at a high level while the oscillating voltage signal exceeds the reference voltage. This rectangularly transduced wave oscillating signal S1 is supplied to one of the input terminals of an adder 23 as an oscillation checking signal S5.

A first comparator circuit 15 as an offset checking circuit 6 compares the acceleration detecting signal from the amplifier circuit 5 with the predetermined normal voltage range to determine whether the acceleration detecting signal is within the normal range or not, and generates an offset checking signal S4 having different levels. The offset checking signal S4 is supplied to the other input terminal of the adder 23. The adder 23 adds the offset checking signal S4 and the oscillation checking signal S5 and supplies a composite checking signal S6 to the extra checking circuit 8.

The extra checking circuit 8 receives the composite checking signal S6, generates a self-checking signal S7 representative of an operation state of the whole acceleration system. In the extra checking circuit 8, integral circuit 16 integrates the checking signal S6 for a predetermined period, and supplies the integrated values to a third comparator circuit 22. The third comparator circuit 22 compares the integrated values with a reference value, and generates a self-checking signal representing normal or not of the whole operation of the acceleration sensor system.

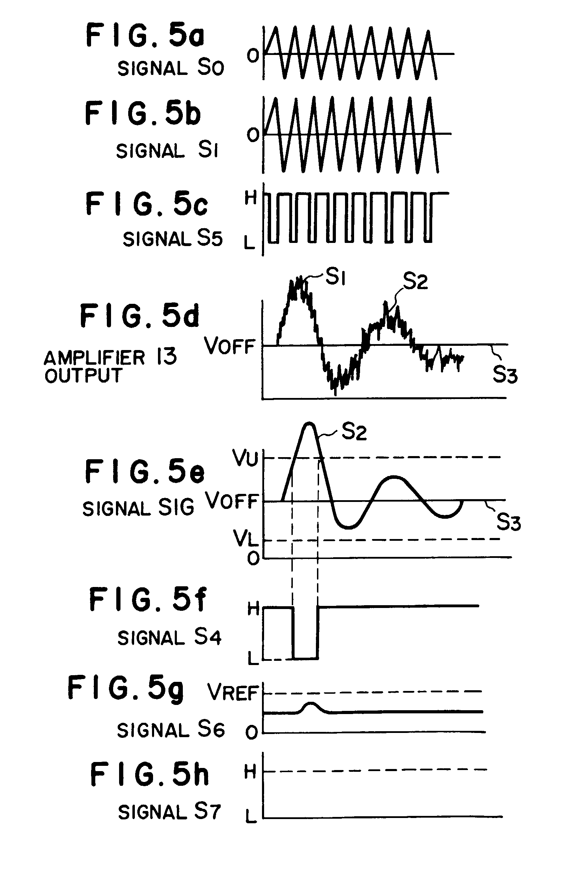

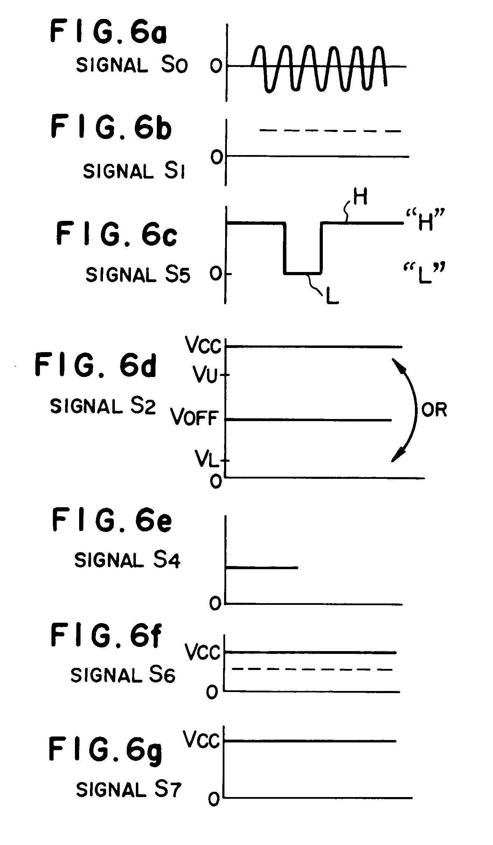

Next, with reference to Figs. 5a to 5h and 6a to 6g, self-checking operation of the acceleration sensor system shown in Fig. 4 is explained. Figs. 5a to 5h show wave forms in the normal state. The oscillator circuit 4 outputs the checking signal So at a predetermined frequency while switch 21 is closed (Fig. 5a). The checking signal So is supplied to the chekking electrode 2A of the acceleration sensor device 3. In response to the checking signal So, the oscillating signal S1, whose voltage is proportional to the voltage of the checking signal So, is obtained from the detected electrode 2B of acceleration sensor device 3 (Fig. 5b). The acceleration signal S2 represents the acceleration force which is applied to vibrator 1 and is conveyed by the checking electrode 2B regardless of the existence of checking signal S0. During self-checking, the added signal of oscillating signal S1 and acceleration signal S2 is released. The added signal (S1 + S2) is impedance transduced by the impedance transducer 11 of amplifier circuit 5, and is supplied to the first and second highpass filters 12 and 17.

The first highpass filter 12 eliminates the direct current voltage due to the impedance transducer 11 and minor variation due to a pyroelectric effect and feeds an output to one terminal of the amplifier 13. An offset signal of Voltage Voff from the offset signal generator 20 is fed to the other terminal of the amplifier 13. The amplifier 13 released a superimposed signal of the added signal (S1 + S2) and the offset signal S3 (Fig. 5d). The lowpass filter 14 eliminates oscillating signal S1 and releases acceleration signal SIG (Fig. 5e).

This acceleration signal SIG is fed to the offset checking circuit 6 provided by the first comparator circuit 15. This first comparator circuit 15 compares the acceleration signal SIG with a maximum limit value Vu and a minimum limit value V1 and, if the level of the acceleration signal SIG exceeds the range between maximum limit value Vu and minimum limit value Vl, generates a low level signal L or a high level signal H, respectively (Fig. 5f).

On the other hand, the added signal (S1 + S2) is fed to the second highpass filter 17 of the oscillating signal checking circuit 7 via the impedance transducer 11. The second highpass filter 17 eliminates the acceleration signal S2 from the added signal (S1 + S2) and extracts the frequency component of oscillating signal S1. The oscillating signal S1 in added signal (S1 + S2) is amplified in the amplifier 18 and fed to the second comparator 19. The second comparator 19 transduces a triangular wave into a rectrangular wave and emitts the oscillation checking signal S5 (Fig. 5c).

Adder 23 adds offset checking signal S4 and oscillation chekking signal S5 and feeds the added checking signal to the extra checking circuit 8. In the extra checking circuit 8, the added checking signal is integrated by a predetermined time by integral circuit 16 and integral circuit 16 feeds the integral checking signal to the third comparator circuit 22 (Fig. 5g). This third comparator circuit 22 compares the integral chekking signal with the reference level Vref (Fig. 5g) and emits self-checking signal S7 (Fig. 5h), which is at a high level H when the integral checking signal exceeds reference level Vref and at a low level L in other cases.

### (Explanation of operation in abnormal state).

Next, referring to Figs. 6a to 6g, the self-checking operation in abnormal state is explained.
1.
   When the electrical connection of acceleration sensor device 3 is abnormal, i.e. a scrape (exfoliate) or a defective conductive line occurs.
   If it is determined upon checking electrode 2A that electrode 2B is detective no oscillation signal So (Fig. 6a) is obtained from defecting electrode 2B even if checking signal So is added to checking electrode 2A (Fig. 6b). Therefore, the oscillation checking signal S5 output from second comparator circuit 19 is at a high level (Fig. 6c). Adder 23 receives a high-level signal from oscillation checking signal S5 and generates a high-level adding signal (Fig. 6f). Furthermore, the integral circuit 16 of the extra checking circuit 8 generates a high-level self-checking signal (Fig. 6g). Comparator circuit 22 receives a high-level integral checking signal on an inverting input terminal and generates a high level self-chekking signal representing an abnormal condition. Abnormal conditions in either of oscillator circuit 4, impedance transducer 11, highpass filter 17 or oscillating signal checking circuit 7 can be detected similarly.
2.
   Abnormal conditions of either of offset signal generator 20, amplifier 13, highpass filter 12, low pass filter 14.
   In this case, the offset voltage is abnormal and the offset checking circuit can detect this abnormal condition. In comparator circuit 15 consisting of offset checking circuit 6, maximum limit value Vu, and minimum limit value VL are set in respect of the reference offset voltage which corresponds to no acceleration (OG) state in the acceleration sensor by considering a normal acceleration signal level (Fig. 6d). Vcc is the driving voltage. If the acceleration signal level exceeds this maximum limit value Vu or minimum limit value VL, offset checking circuit 6 generates a low level offset checking signal S4 (Fig. 6g). In the other case, offset checking circuit 6 generates a high-level offset checking signal S4 (Fig. 6e). The extra checking circuit 8 generates a high level self-chekking signal S7 showing an abnormal for detecting abnormal (Fig. 6g).

As explained above, in this invention, an acceleration sensor device capable of self-checking during driving is obtained. And it is possible to check both the acceleration sensor element and operation of the self-checking circuit itself by means of the oscillation checking circuit and offset checking circuit.

It will be understood that the present invention is not to be limited to the specific embodiments discussed herein but extends to all modifications thereof which will occur to those skilled in the art upon consideration of the general disclosure, its illustrative details and the scope of the claims appended hereto.

The above description of the preferred embodiment of this invention and the preferred dimensions thereof are given by way of example only, and numerous modifications can be made by those familiar with acceleration sensors without departing from the scope of the invention as defined in the claims. Indeed, the suggested dimensions are preferred only for the acceleration sensor indicated, and these dimensions should be modified accordingly to accomodate the piezoelectric device of different dimensions or configurations.

## Claims

1. An acceleration sensor device (3) comprising, planar vibrator means (1) with a piezoelectric area (1a) having piezoelectricity and a non-piezoelectric area (1b) having no piezoelectricity, a first electrode (2B) provided on the upper face of said piezoelectric area (1a) for generating an acceleration detecting signal (S₂), a second electrode (2A) provided on the upper face of said non-piezoelectric are (1b) for inputting a checking signal (S₀) and a third electrode (2D) provided on the lower face of said vibrator means, said acceleration detecting signal (S₂) corresponding to an applied acceleration force.

2. An acceleration sensor device as claimed in Claim 1, further comprising backboard means (9) connected to said third electrode (2D) and a supporting means (10) supporting said backboard means.

3. An acceleration sensor system comprising an acceleration sensor device (3) as claimed in claim 1 and a self-checking circuit , the self-checking circuit comprising
- oscillation circuit means (4) supplying a self-checking signal (So) having a predetermined frequency and voltage to the second electrode (2A) of said acceleration sensor device (3),
- first checking circuit means (7) generating a first checking signal (S₅) representing the compared result of comparing the frequency component of said self-checking signal (So) included in said acceleration detecting signal (S₂) with a predetermined first value,
- first adder means (13) for superimposing a direct current signal (S₃) of predetermined voltage to said acceleration detecting signal (S₂),
- filter circuit means (14) outputting an acceleration signal (SIG) representing an acceleration force applied to said acceleration sensor device (3) eliminating said frequency component of said self-checking signal (So) from an output signal of said first adder means (13),
- second checking circuit means (6) generating a second checking signal (S₄) by establishing whether said acceleration signal (SiG) lies within a predetermined normal voltage range,
- third checking circuit means (8) generating a checking result signal (S₇) representing the operation state of said acceleration sensor device (3) in response to said first and second checking signals (S₅, S₄) from said first and said second checking circuit means (7,6),
- said third checking circuit means (8) comprising a second adder (23) outputting an added signal by adding said first and second checking signals (S₅, S₄) , and a comparator circuit (22) outputting said checking result signal (S₇) by comparing said integrated signal (S₆) with a predetermined third value.

4. An acceleration sensor system as claimed in Claim 3, wherein said oscillating circuit means (4) has a switch means (21) for feeding said self-checking signal (So) for a predetermined period, to said second electrode (2A).

## Patentansprüche

1. Beschleunigungsfühlereinrichtung mit ebenem Vibrationsmittel (1) mit einem piezoelektrischen Bereich (1a) mit Piezoelektrizität und einem nicht piezoelektrischen Bereich ohne Piezoelektrizität sowie mit einer ersten Elektrode (2B) in der Zuordnung zur Oberseite des piezoelektrischen Bereiches (1a) zur Erzeugung eines Beschleunigungsermittlungssignales (S₂), mit einer zweiten Elektrode (2A) in der Zuordnung zur Oberseite des nicht piezoelektrischen Bereiches (1b) zur Eingabe eines Prüfungssignales (So) und mit einer dritten Elektrode (2D) in der Zuordnung zur Unterseite des Vibrationsmittels, wobei das Beschleunigungsermittlungssignal (S₂) einer zugeführten Beschleunigungskraft entspricht.

2. Beschleunigungsfühlereinrichtung wie in Anspruch 1 beansprucht, die ferner ein der dritten Elektrode (2D) zugeordnetes Haltemittel (9) und ein Stützungsmittel (10) zum Halten des Haltemittels aufweist.

3. Beschleunigungsfühlersystem mit einer Beschleunigungsfühlereinrichtung (3) wie in Anspruch 1 beansprucht und einem selbstprüfenden Schaltkreis, der einschließt
- ein Oszillationsschaltkreismittel (4) zur Lieferung eines Selbstprüfungssignales (So) einer vorbestimmten Frequenz und Spannung an die zweite Elektrode (2A) der Beschleunigungsfühlereinrichtung (3),
- ein erstes Überprüfungsschaltkreismittel (7) zur Erzeugung eines ersten Überprüfungssignales (S₅) als Repräsentanz des Vergleichsergebnisses aus dem Vergleich der Frequenzkomponenten des Selbstsprüfungssignales (So) unter Einschluß des Beschleunigungsermittlungssignals (S₂) mit einem vorbestimmten ersten Wert,
- einem ersten Additionsmittel (13) zur Überlagerung eines Gleichstromsignales (S₃) vorbestimmter Spannung über das Beschleunigungsermittlungssignal (S₂),
- ein Filterschaltkreismittel (14) zur Lieferung eines Beschleunigungssignales (SIG), das repräsentativ für eine Beschleunigungskraft ist, die der Beschleunigungsfühlereinrichtung (3) zugeführt wird, um die Frequenzkomponente des Selbstprüfungssignales (So) aus einem Ausgangssignal des ersten Additionsmittels (13) zu eliminieren,
- ein zweites Überprüfungsschaltkreismittel (6) zur Erzeugung eines zweiten Überprüfungssignales (S₄) durch die Bestimmung, ob das Beschleunigungssignal (SIG) innerhalb eines vorbestimmten Normalspannungsbereiches liegt,
- ein drittes Überprüfungsschaltkreismittel (8) zur Erzeugung eines Überprüfungsergebnissignales (S₇), das repräsentativ ist für den Betriebszustand der Beschleunigungsfühlereinrichtung (3) abhängig vom ersten und zweiten Überprüfungssignal (S₅, S₄) des ersten und zweiten Überprüfungsschaltkreismittels (7,6),
- wobei das dritte Überprüfungsschaltkreismittel (8) ein zweites Addiermittel (23) einschließt, das ein Addiersignal liefert, das durch Addition von erstem und zweitem Überprüfungssignal (S₅, S₄) entstanden ist und wobei das Überprüfungsschaltkreismittel weiter einschließt einen Vergleichsschaltkreis (22) zur Lieferung des Überprüfungsergebnissignales (S₇) durch Vergleich des integrierten Signals (S₆) mit einem vorbestimmten dritten Wert.

4. Beschleunigungsfühlersystem wie in Anspruch 3 beansprucht, bei dem das Oszillationsschaltkreismittel (4) ein Schaltmittel (21) aufweist, um das Selbstprüfungssignal (So) während einer vorbestimmten Periode der zweiten Elektrode (2A) zuzuführen.

## Revendications

1. Dispositif capteur d'accélération (3) comprenant un moyen formant vibreur planar (1) avec une zone piézo-électrique (1a) ayant de la piézo-électricité et une zone non-piézo-électrique (1b) n'ayant pas de piézo-électricité, une première électrode (2B) disposée sur la face supérieure de ladite zone piézo-électrique (1a) pour produire un signal de détection d'accélération (S₂), une seconde électrode (2A) disposée sur la face supérieure de ladite zone non-piézo-électrique (1b) pour entrer un signal de contrôle (S₀) et une troisième électrode (2D) disposée sur la face inférieure dudit moyen formant vibreur, ledit signal de détection d'accélération (S₂) correspondant à une force d'accélération appliquée.

2. Dispositif capteur d'accélération selon la revendication 1, comprenant en outre un moyen formant panneau (9) relié à ladite troisième électrode (2D) et un moyen de support (10) supportant ledit moyen formant panneau.

3. Système capteur d'accélération comprenant un dispositif capteur d'accélération (3) selon la revendication 1, et un circuit d'auto-contrôle, le circuit d'auto-contrôle comprenant
- un moyen formant circuit d'oscillation (4) délivrant un signal d'auto-contrôle (S₀) ayant une fréquence et une tension prédéterminées à la seconde électrode (2A) dudit dispositif capteur d'accélération (3),
- un premier moyen formant circuit de contrôle (7) produisant un premier signal de contrôle (S₅) représentant le résultat comparé de la comparaison de la composante de fréquence dudit signal d'auto-contrôle (S₀) comprise dans ledit signal de détection d'accélération (S₂) avec une première valeur prédéterminée,
- un premier moyen formant additionneur (13) pour superposer un signal de courant continu (S₃) de tension prédéterminée sur ledit signal de détection d'accélération (S₂),
- un moyen formant circuit de filtre (14) sortant un signal d'accélération (SIG) représentant une force d'accélération appliquée audit dispositif capteur d'accélération (3) éliminant ladite composante de fréquence dudit signal d'auto-contrôle (S₀) d'un signal de sortie dudit premier moyen formant additionneur (13),
- un second moyen formant circuit de contrôle (6) produisant un second signal de contrôle (S₄) en établissant si ledit signal d'accélération (SIG) est compris dans une gamme de tensions normale prédéterminée,
- un troisième moyen formant circuit de contrôle (8) produisant un signal de résultat de contrôle (S₇) représentant l'état de fonctionnement dudit dispositif capteur d'accélération (3) en réponse auxdits premier et second signaux de contrôle (S₅, S₄) provenant desdits premier et second moyens formant circuit de contrôle (7, 6),
- ledit troisième moyen formant circuit de contrôle (8) comprenant un second additionneur (23) sortant un signal additionné en additionnant lesdits premier et second signaux de contrôle (S₅, S₄) et un circuit comparateur (22) sortant ledit signal de résultat de contrôle (S₇) en comparant ledit signal intégré (S₆) avec une troisième valeur prédéterminée.

4. Système capteur d'accélération selon la revendication 3, dans lequel ledit moyen formant circuit oscillant (4) a un moyen formant commutateur (21) pour délivrer ledit signal d'auto-contrôle (S₀) durant une période prédéterminée à ladite seconde électrode (2A).
